(19) Europäisches Patentamt
European Patent Office
Office européen des brevets

(11) **EP 2 848 962 A1**

(12) **EUROPEAN PATENT APPLICATION**
published in accordance with Art. 153(4) EPC

(43) Date of publication:
**18.03.2015 Bulletin 2015/12**

(51) Int Cl.:
**G01S 13/62** *(2006.01)*      **G01S 13/90** *(2006.01)*

(21) Application number: **13784403.1**

(22) Date of filing: **26.04.2013**

(86) International application number:
**PCT/BR2013/000136**

(87) International publication number:
**WO 2013/163707 (07.11.2013 Gazette 2013/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.05.2012 BR 102012010659**

(71) Applicant: **Oil Finder Servicos de Sensoriamento Remoto e**
**Modelagem Computacional Ltda.**
**CEP-21941-972 Rio de Janeiro (BR)**

(72) Inventor: **MANO, Manilo Fernandes**
**CEP-22270-010 Rio de Janeiro - RJ (BR)**

(74) Representative: **Martin Santos, Victoria Sofia et al**
**Esquivel Martin Pinto & Sessano**
**Paseo de la Castellana,141. Planta 21**
**28046 Madrid (ES)**

(54) **METHOD FOR IDENTIFYING AND CLASSIFYING PETROLEUM EXUDING AREAS AT THE BOTTOM OF THE SEA BY REVERSE MODELLING**

(57)     The present invention discloses a process that describes an inverse modeling that makes a time and space regression to estimate the trajectory of an oil seep slick between the sea surface, wherein it has been detected by satellite, and the place where the escape has happened at the seabed. Therefore, the final information is the oil seep area at the seabed. After their identification, these areas are classified according to levels of reliability, from lower to higher degree of exploratory risk. This degree of reliability is measured according to strict temporal, hydrodynamic, geographic and geological criteria.

Fig. 1

EP 2 848 962 A1

**Description**

## FIELD OF APPLICATION

The technology identifies, from computational models, seabed areas where natural escapes of oil (seepage) happen. Considering that these escapes indicate the existence of oil generation and migration and that the technology is based on a simulator, the inverse modeling allows locating new petroleum systems in any oceanic region worldwide. Since it significantly reduces the costs and exploratory risks, the technology is principally applied to oil exploration.

## STATE OF THE ART

The remote mapping of oil seeps is currently made by synthetic aperture radar (SAR in the English acronym), onboard satellites or aircraft, which only 'see' the sea surface. That is to say, the final information is points at the sea surface, wherein the oil seep have been detected. However, until the seep is detected, it has traveled the entire water column and after reaching the sea surface it has been transported by surface currents. The distance between the vertical projection of the point at the sea surface to the point where the oil has effectively escaped on the seafloor can reach hundreds of kilometers. As the oil exploration drives more to offshore regions, this effect of oceanic transportation will increase. In the state of the art, there are documents that describe technologies that only operate at the sea surface.

Document PI0622161-0 describes a radar system comprising a platform (10) mobile along a path relating to a portion of soil surface (20) and carrying a positioning device, a temporization device and a radar equipment (1). This equipment is adapted to implement SAR to form a soil portion image. It includes recording means to collect radar raw data comprising radar echo amplitudes registered with distance and instant of time of collection and these are interlaced with measuring data of the platform position registered in respect of their collection time. It also comprises processing means (3,4) to process SAR using radar raw data and collected position measure data, and are adapted to calculate, through iteration, a sequence of sums of length k of radar amplitudes, which are registered with distance and angle parameters defined in relation with a common origin in space in three dimensions, the origin defined in a location along a vector made-up by the sum vector PQPJ + PiP2 +... + P^iPfc of connected k vectors of 3 dimensions PQPJ, -PjP2V -5 Pk-I-Pk. Each vector (sub-aperture) contains a respective origin of each term of radar amplitude on the sum, and the processing means are adapted to initiate the iteration process in a first stage of iteration taking the radar raw data as well as the amplitudes into account, where these radar data have their origins along the vectors starting and ending at 3 dimensions points given by the positioning measurements.

The document CN102096070 describes the detection of oil spilling at the sea surface by full polarization synthetic aperture radar. The method comprises the following steps: perform the segmentation of adaptive threshold value in full polarization SAR image to obtain full polarization SAR images from the sea surface; select a prepared sample and a test sample of full polarization SAR images sent from the sea surface; prepare a SVM (support vector machine) and normalization feature vectors of detector polarization, which comprise scattering entropy H, scattering angle alpha, negative entropy A, co-polarization of gamma ratio, cross-polarization of delta ratio, depolarization of delta ratio, phase difference of co-polarization phi HH-VV and cross-polarization of phase difference phi HH-VV; and finally detection and identification of oil spill and suspicious objects by using SVM and send the detection result. The method has high speed detection characteristics and low range of false positive and it is suitable to detect by SAR the oil spill at sea surface.

The document CN101571915 discloses a method for identifying oil spill of an SAR image based on a characteristic value, which comprises the following steps: a, selecting the SAR image to be identified for processing; b, performing edge detection on the image by using an improved C-V model so as to determine a target boundary; c, measuring the characteristic value after extracting a target; d, identifying an object by adopting a Mahalanobis distance method and a composite probability method; and e, judging whether the image in a dark region is the oil spill according to the two methods in the step d. The technical proposal uses the advantage that the synthetic aperture radar (SAR) can perform high-resolution oil spill monitoring, day and night, and under all-weather conditions; the selected characteristic value is small in quantity and has obvious effect of judging the oil spill compared with other conventional characteristic quantities (such as area, perimeter and the like); the method has a simple algorithm and is easy to achieve by using the Mahalanobis distance method and the composite probability method; and the method is advantageous to be achieved by computer program.

Further, the document RU2231037 describes in the field of testing and measurement technology, a selection of check of oil and gas equipment for tightness, a proposed method consists in observation of pipe line in the direction of localization of the route by an low-altitude flying vehicle at simultaneous scanning the pipe line with the aid of adjusted infra-red image and TV sensors and digital filtration of signals of locator, infra-red image and TV sensors; three additional locators of at different lengths of waves are used as route finders ; transceiving antennas of four locators are located at tips of helicopter main rotor blades; signals received by these antennae are processed by algorithm of synthetic aperture; indicative of gas of liquid leaks is a local drop of temperature recorded by infra-red image sensor and radar received information and TV sensor; depth of pipe line is determined by color of image on display screen. This way, there can be obtained the enhanced accuracy of location of leakage.

Therefore, it is apparent that the inverse modeling proposed in this invention allows the final information to be of escape (seep) areas at the seabed (no longer at the surface), which is the information that really matters to the exploration. Furthermore, groups of identified points at the sea surface have the same origin at seabed, that is, the number of points at the surface is larger than the number of escape sources. The inverse modeling is therefore more precise and refined. Testes performed until now indicate that the inverse modeling reduces in more than 50 times the investigation area and refines 8 times the results already described in the state of the art.

When comparing the present invention with the current art, the inverse modeling delivers remotely obtained information about the seabed, one that is more precise and refined, with a reliability degree that takes the seep origin and the variable hydrodynamics into account, which have been until then ignored, even though they are extremely important.

## SUMMARY OF THE INVENTION

The present invention discloses a process that describes an inverse modeling that makes a time and space regression to estimate the trajectory of an oil seep between the sea surface, wherein it has been detected by satellite, and the place where the escape has happened at the seabed. Therefore, the final information is the oil seep area at the seabed. Hereinafter, oil slicks detected on the sea surface will be called 'seep points' and the place of the scape on the seabed will be called 'seep areas'.

After their identification, these areas are classified according to levels of reliability, from lower to higher degree of exploratory risk. This degree of reliability is measured according to strict temporal, hydrodynamic, geographic and geological criteria.

In order to perform the oil inverse modeling, it is firstly necessary to recreate the oceanic circulation by the time when each oil seep point has been detected at the sea surface. To do this, data of different satellites and hydrodynamic model results are used. In the step of hydrodynamic simulation, each oil seep point is associated with a three-dimensional oceanic circulation and a wind field that vary in time with hourly frequency. The wind fields are obtained by satellite and the circulation is obtained through data assimilation also by satellite (elevation and temperature of sea surface). The model grid is configured in a way that it represents the main oceanographic driving forces at the region.

The 3D current and wind fields as obtained by hydrodynamic modeling are imported by the inverse model. The inputs are: bathymetry; current and wind, varying in time and three-dimensional space. The model makes then the time regression, transporting oil from the detection position until its origin at the seabed. For each seep point, several simulations are made. The definition of seep areas is made from calculating the point where the maximum convergence happens within the solutions sets. There have been developed algorithms aiming at automatically estimate these areas.

It is important to note that the technologies used along the entire methodology have intrinsic errors (seep classification, spatial-temporal resolution of the models, input of meteo-oceanographic data, etc.), thus it is not feasible to guarantee that the results are the absolute truth. However, the results obtained until now have shown that 80% of the areas calculated by Inverse Modeling are above compatible geological features.

## BRIEF DESCRIPTION OF DRAWINGS

Figure 1 shows a schematic drawing of the inverse modeling principle.

Figure 2 presents a schematic representation of the seep area delimitation at the seabed.

## DETAILED DESCRIPTION OF THE INVENTION

The present invention discloses a process that describes an inverse modeling that makes a time and space regression to estimate the trajectory of an oil seep between the sea surface, wherein it has been detected by satellite, and the place where the escape has happened at the seabed. Therefore, the final information is the oil seep area at the seabed.

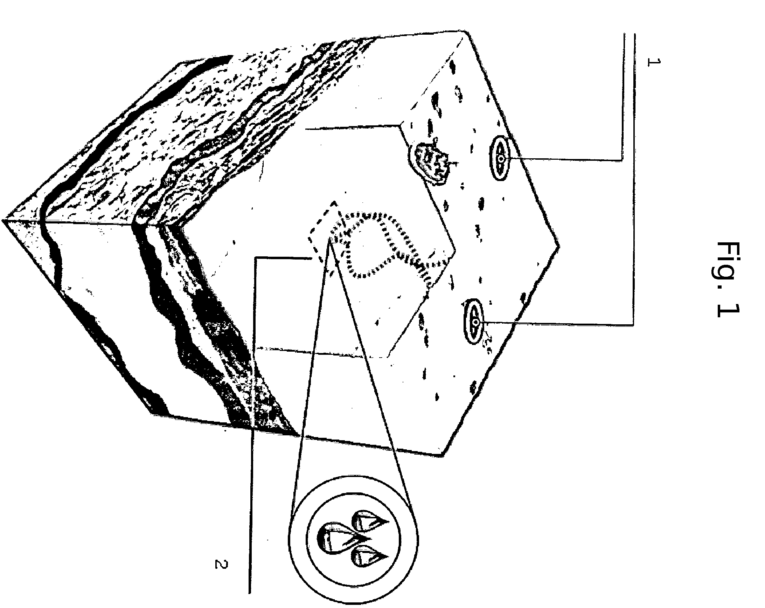

Figure 1 illustrates a seep area (2) defined by inverse modeling, wherein each oil seep point (1) as identified at the sea surface has its reverse trajectory (that is, going back in time) simulated by a computational model. The seep points can have distinctive dates and each seep will have the corresponding oceanic and atmospheric setting reconstituted. This is due to the fact that the current at different depths and the winds are responsible by the horizontal displacement of the oil in relation with its origin. Once the current system and the surface winds by the time of the oil detection are recreated, they can be used to simulate the oil trajectory.

The process to identify and classify the oil seep areas happens the following way:

- Long Term Hydrodynamic Modeling: simulation of at least 3 years of three-dimensional oceanic circulation with the aim of calibrating and validating the model to the interest region and evaluate if the main oceanographic features are being represented by the model.

- Obtainment of Coefficients and Correlation Factors: calculation of statistics that correlate the values of current at the surface to the current at other depths.

- Obtainment of sea surface current field for an seep point date: generation of the sea surface current field from the following satellite data: wind, sea surface temperature and sea surface elevation.

- Obtainment of the three-dimensional current field for a seep point date: generation of the hydrodynamic 'cube' of specific date from the sea surface current field and statistic correlations already obtained.

- Modeling of reverse trajectory of oil: variation of the position of mass center of oil seep, going back in time and space until reaching the seabed.

- Definition of the seep area: selection of regions to where the different seeps solutions converge. The seep areas are defined in these convergence regions.

- Classification of the seep area: an algorithm analyses the characteristics of the seep area and attributes a score, called the reliability factor (Rf). that will be combined with the area size, in order to achieve a classification between 6 predefined levels:

|  | Area < 30 km$^2$ | Area > 30 km$^2$ |
|---|---|---|
| **Rf > 0.75** | N1 | N2 |
| **0.50 < Rf < 0.75** | N3 | N4 |
| **Rf < 0.50** | N5 | N6 |

wherein N1 is the class that indicates less exploratory risk.

In order to achieve a better understanding of the process, each step will be separately described below:

(a) <u>LONG TERM HYDRODYNAMIC MODELING</u>

The main objective of hydrodynamic modeling is to simulate the three-dimensional current field using the physical principles of conservation of momentum, energy and mass. These principles can be expressed in a complex system of differential equations. There are several three-dimensional hydrodynamic models of open source available, the main models being POM, ROMS, MICOM and HYCOM. POM (Princeton Ocean Model) was the hydrodynamic model used to the long term simulation.

The model simulates the system of current of a determined region for each time interval (around 10 to 20 seconds) during more than 3 years. The values of current are calculated for the nodes of the model grid. Horizontally, the distance between nodes (grid spatial resolution) is defined in order to represent the main region oceanographic features (oceanic current, eddies, etc.). Vertically, the water column is divided in 15 to 35 layers, depending on the complexity level of the circulation at the region. Each depth layer will have its circulation simulated.

The model uses real data of wind, heat flows, tide, sea temperature and sea surface elevation as obtained by different satellites in such a way that the simulated values are as close as possible to what is observed in nature. This data insertion as observed in computational models is known as data assimilation.

The results of hydrodynamic modeling have been compared with ocean measurements in different depths validating the model.

(b) <u>OBTAINMENT OF COEFFICIENTS AND CORRELATION FACTORS</u>

The main source of data for hydrodynamic simulations is operational satellites. However, their information is only of the sea surface. It is necessary, then, to turn to a methodology capable of project the surface data along the depth. Since the surface data are correlated to the current vertical structure, it is possible to infer the three-dimensional current field from the satellite data.

To make this vertical projection, the method herein used is based on the calculation of correlation coefficients and factors. For this, the method uses long term modeling data in order to guarantee significant statistics. With the hydrodynamic modeling, it is possible in seconds magnitude, for example, each 10 to 20 seconds, to have the three-dimensional currents in each grid node over the years. This data volume guarantees a satisfactory sample universe.

Below there are the correlation factor and coefficient.

Correlation Factor:

$$F_{U_0}^U(x,y,z) = \frac{\langle dU * dU_0 \rangle}{\langle (dU_0)^2 \rangle}$$

$$dU_0(x,y,t) = U_0(x,y,t) - <U_0>(x,y)$$

$$dU(x,y,z,t) = U(x,y,z,t) - <U>(x,y,z)$$

wherein < > indicates a time averaged value and $F_{U_0}^U$ is the correlation factor between surface current ($U_0$) and the current at different layers ($U$).

Correlation Coefficient:

$$C_{U_0}^U(x,y,z) = \frac{\langle dU * dU_0 \rangle}{\sqrt{\langle (dU)^2 \rangle \langle (dU_0)^2 \rangle}}$$

wherein $C_{U_0}^U$ is the correlation coefficient between surface current ($U_0$) and the current at different layers ($U$).

The same statistics are obtained for the current component in the north-south direction (V).

(c) <u>OBTAINMENT OF THE SURFACE CURRENT FIELD FOR AN SEEP POINT DATE</u>

In order to recreate the surface circulation in any worldwide oceanic region, the following input parameters are obtained by satellite: wind (W), temperature of sea surface (TSM) and elevation of sea surface (ESM). The surface current ($U_0$) is a function of such parameters:

$$U_0(x,y,t) = f[W(x,y,t), ESM(x,y,t), TSM(x,y,t)]$$

The surface current is calculated for the dates of each seep point detected at the sea surface (1). The temporal resolution of satellite data of ESM and TSM is a daily resolution, while the W resolution is a 6 hours resolution. A linear interpolation is then performed in such a manner that there are surface current field within hourly resolution in the days that have preceded the seep detection date (1).

(d) <u>OBTAINMENT OF THE THREE-DIMENSIONAL CURRENT FIELD FOR A SEEP POINT DATE</u>

The current at different layers of depth ($U$) can be obtained from the surface current ($U_0$) using the previously calculated correlation factors. The final current ($U_f$) used in inverse modeling is a function of $U$ and $C_{U_0}^U$ :

$$U(x,y,z,t) = <U>(x,y,z) + F_{U_0}^U(x,y,z) * dU_0(x,y,t)$$

$$U_f(x,y,z,t) = f\left[C_{U_0}^{U}(x,y,z), U(x,y,z,t)\right]$$

The same procedure is used to calculate component V.

Therefore, each seep point (1) identified at sea surface is associated to a hydrodynamic 'cube' that represents the four-dimensional circulation (three spatial dimensions and time) reconstituted for the date of seep detection (1) by satellite and for the prior days. The first layer of this cube (surface) is calculated using wind, elevation and temperature of sea surface data obtained by satellites. The other layers are calculated from the correlation coefficients and factors. Optionally, tide currents are further added to this cube.

So the three-dimensional circulation can be recreated using only surface data. It is thus possible to simulate the system of current to any worldwide oceanic region using only satellite data.

(e) <u>MODELING OF OIL REVERSE TRAJECTORY</u>

The 4D fields of currents and wind obtained in hydrodynamic simulation are imported by the inverse model. These are the fields that will transport oil until its origin, going back in time. The model inputs are: bathymetry; current and wind, varying in time and three-dimensional space; and date, hour and position of oil by the time of satellite detection.

The model goes back in time transporting the centroid of the oil seep detected at the surface, i.e., it is the seep point that is transported, which represents the mass center detected of the same. When considering the oil centroid detected by satellite as the final position, the position in the prior time interval $S_{ia}$ is calculated from velocity, temporal resolution of the model ($\Delta t$) and random displacement, due to diffusive processes:

$$\vec{v} = \frac{\Delta \vec{S}}{\Delta t} = \frac{\vec{S}_f - \vec{S}_i}{\Delta t}$$

$$\vec{S}_i = -\vec{v} * \Delta t + \vec{S}_f$$

$$\vec{S}_{ia} = \vec{S}_i + dif.$$

In the following time interval, $S_{ia}$ becomes $S_f$, a new prior position is calculated and successively, until the seep centroid reaches the seabed. The time interval $\Delta t$ should be sufficiently short in order that the centroid does not 'skip' any vertical layer. The oil vertical velocity varies between that as defined by Stokes' Law (terminal velocity) and 15 cm/s.

It should be pointed out that the order of the field of current is reverted, i.e., the first field of $\vec{v}$ to be used is that field referring to the moment of satellite detection and the second field of $\vec{v}$ is the field from 1 hour before the detection, and successively.

Besides the transport as promoted by the current calculated in the step of hydrodynamic simulation ($\vec{U}_f$), the model takes into account two effects: (1) the additional transportation carried out by the wind, since the stress of wind on oil is different in relation to water (the stress of wind on water has already been accounted for in the hydrodynamic simulation); and (2) the transportation due to waves. These effects are parameterized as a function of wind and added to the field of velocities that will transport the oil:

$$\vec{v} = f\left(\vec{U}_f, \vec{W}\right).$$

The time while the oil remains at sea surface before it is detected by the satellite (surface time - TS) is obtained as a function of the backscattering coefficient in the SAR image ($\sigma^0$) and wind at the moment of detection. The images of synthetic aperture radar (SAR) are the most used for detection of oil seeps at sea surface. The backscattering coefficient is a radiometric quantity that expresses the radar reflected signal per unit area. The presence of oil decreases the backscattering of the surface and insofar as the surface time increases, the contrast between oil backscatter and adjacent water goes vanishing. This function is empirically obtained during the process of validation of the technology.

$$TS = f\left(\sigma^{0}, W\right) \pm Error$$

At least 25 simulations are made for each seep point with varying TS, vertical velocity, diffusion and wind (the wind obtained by satellite). The number of simulations will depend on the magnitude of error of TS. Therefore, each seep point (1) of oil at sea surface is associated with a set of solutions having at least 25 points at seabed that are their possible origins.

(f) DEFINITION OF THE SEEP AREA

The first step to define the seep area is the identification of clusters of solutions of different seep points, that is, groups of solutions that are close to each other. An algorithm scans all the solutions of all the seep points searching for clusters of 3 or more different seep solutions where the maximum convergence between them happens (the sum of the distances between solution points is the least between them). The clusters of solutions of 2 or less seeps are not selected, i.e., each identified cluster will contain, at least, 3 points that are solutions of different seeps.

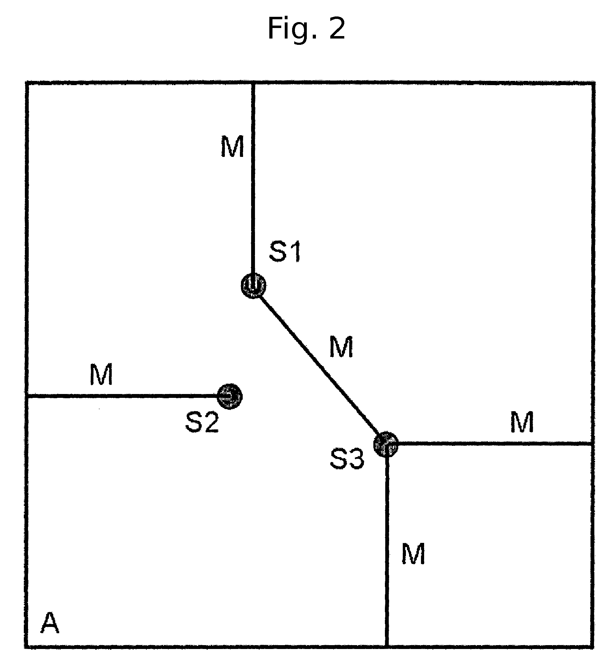

Since the seep points that compound each cluster are defined, the largest distance between the cluster solutions is calculated, as the distance M in Figure 2. Starting from the premise that the solutions of a determined cluster should converge to the same point, this largest distance is the estimated method error. By adding the distance M to the geographic boundaries as defined by the solutions, the oil seep area can be obtained at seabed. This process is performed for each identified cluster.

As described in figure 2, the seep area is defined from the solutions at seabed of at least 3 different seep points (S1, S2, S3), wherein the largest distance between the solutions, which in this example happens between S1 and S3 (distance M), is taken into account as the method error estimative. This distance is added to the coordinate boundaries as defined by the solutions to the calculation of the seep area (A).

(g) CLASSIFICATION OF THE SEEP AREA

Each seep area is classified according to the associated exploratory risk. The best classification level indicates greater precision and probability of occurrence of oil escape, which translates into a lower exploratory risk. The classification takes into account two parameters, seep area size and its reliability factor. The smaller the area, the greater is its precision, and the greater the reliability factor, the greater is the trust that oil seepage happens at that area.

The Reliability Factor is a function of 5 variables: (1) number of cluster solutions; (2) number of distinct dates among the cluster seep points; (3) horizontal distance between the seep point detection position and its origin at the seabed; (4) average error of TS; and (5) proximity of geological faults. Each variable receives a score between 0 and 1. Specific software weights these scores with its respective weight and calculates a final score, also between 0 and 1, which is the Reliability Factor of the seep area.

Therefore, the final products of all the process are the geographic coordinates of the vertexes that define the seep area and this area classification.

The inverse modeling technology has been validated in a joint project of COPPE/UFRJ and Petrobras, wherein 10 seep areas at seabed have been mapped. In 80% of the cases, the seep area was over a geological fault or at a distance of less than 2 km, according to the table below. The geological faults are the path through which the oil migrates until reaching the ocean. So, the high correlation between the areas as defined by inverse modeling and the presence of geological faults proves the effectiveness of the method.

Validation tests proved that 80% of the areas as defined by inverse modeling were over geological faults, which are the path through which the oil migrates until escaping to the ocean.

| Areas | Size (km$^2$) | Number of seep points at the surface | Distance between the area at seabed and the geological fault (km) |
|---|---|---|---|
| 1 | 42 | 3 | 0 |
| 2 | 2 | 3 | 1 |
| 3 | 10 | 3 | 2 |
| 4 | 12 | 5 | 0 |
| 5 | 6 | 3 | 0 |

(continued)

| Areas | Size (km²) | Number of seep points at the surface | Distance between the area at seabed and the geological fault (km) |
|---|---|---|---|
| 6 | 169 | 4 | 0 |
| 7 | 167 | 4 | 28 |
| 8 | 22 | 3 | 6 |
| 9 | 1 | 4 | 0 |
| 10 | 117 | 4 | 0 |

Besides that, one can conclude that the inverse modeling effectively contributes to the increase in exploratory rate of success. When the BDEP (Banco de Dados de Exploração e Produção, Database of Exploration and Production) data of drilled wells are used, the rate of success of finding hydrocarbons in wells close to the seep areas is 32% greater. Recent studies, using geochemical analysis, showed that sediment samples collected inside seep areas had hydrocarbon evidence rates 139% greater than the ones collected in locations defined without using inverse modeling.

Another important result has been found: in 73% of the cases, the position of oil seeps at sea surface is out of the seep area boundaries as defined by inverse modeling, it demonstrates that mapping seeps only at sea surface is insufficient to the knowledge of their origins.

Although the preferred version of the invention have been illustrated and described, it should be understood that the same is not limited. Several modifications, changes, variations, substitutions and equivalents may be made without departing from the spirit and scope of the present invention.

**Claims**

1. Process to identify and classify oil seep areas at the seabed through inverse modeling, **characterized in that** it comprises the steps of:

   (a) Perform a long term hydrodynamic modeling;
   (b) Obtain coefficients and correlation factors;
   (c) Obtain the surface field of current for an seep date;
   (d) Obtain the three-dimensional field of current for an seep date;
   (e) Perform the modeling of oil reverse trajectory;
   (f) Define the seep area;
   (g) Classify the seep area.

2. Process, according to claim 1, **characterized in that** in the step "a" the three-dimensional oceanic circulation is simulated for a period of more than 3 years.

3. Process, according to claim 1, **characterized in that** in the step "b" the statistics calculation correlates the values of current at the surface to current at other depths using correlation factors and correlation coefficients; wherein the values of correlation factor and correlation coefficient are:

$$F_{U_0}^U(x,y,z) = \frac{\langle dU * dU_0 \rangle}{\langle (dU_0)^2 \rangle}$$

$$dU_0(x,y,t) = U_0(x,y,t) - \langle U_0 \rangle (x,y)$$

$$dU(x,y,z,t) = U(x,y,z,t) - \langle U \rangle (x,y,z)$$

wherein < > indicates a time averaged value and $F_{U_0}^U$ is the correlation factor between surface current ($U_0$) and the current at different layers ($U$);

$$C_{U_0}^U(x,y,z) = \frac{\langle dU * dU_0 \rangle}{\sqrt{\langle (dU)^2 \rangle \langle (dU_0)^2 \rangle}}$$

wherein $C_{U_0}^U$ is the correlation coefficient between surface current ($U_0$) and the current at different layers ($U$), wherein the same statistics are obtained for the current component in the north-south direction (V).

4. Process, according to claim 1, **characterized in that** in the step "c" a surface current field is generated from satellite data: wind (W), temperature of sea surface (TSM) and elevation of sea surface (ESM); wherein the surface current ($U_0$) is a function of the parameters W, ESM and TSM:

$$U_0(x,y,t) = f\big[W(x,y,t), ESM(x,y,t), TSM(x,y,t)\big]$$

wherein the surface current is calculated for the dates of each seep point detected at the sea surface (1); wherein the temporal resolution of satellite data of ESM and TSM is a daily resolution, while the W resolution is a 6 hours resolution; wherein a linear interpolation is then performed in such a manner that there are surface current field within hourly resolution in the days that have preceded the seep detection date (1).

5. Process, according to claim 1, **characterized in that** in step "d" the hydrodynamic cube of a specific date is generated from the field of surface current and the statistic correlations already obtained; wherein the current at different layers of depth ($U$) can be obtained from the surface current ($U_0$) and the correlation factors, as defined in claim 3; wherein the final current ($U_f$) used in inverse modeling is a function of $U$ and $C_{U_0}^U$ :

$$U(x,y,z,t) = <U>(x,y,z) + F_{U_0}^U(x,y,z) * dU_0(x,y,t)$$

$$U_f(x,y,z,t) = f\big[C_{U_0}^U(x,y,z), U(x,y,z,t)\big]$$

wherein the same procedure is used to calculate component V.

6. Process, according to claim 5, **characterized in that** each seep point identified at sea surface (1) is associated to an hydrodynamic 'cube' that represents the four-dimensional circulation reconstituted for the date of seep detection (1) by satellite and for the prior days, wherein the first layer of this cube is calculated using wind, elevation and temperature of sea surface data obtained by satellites.

7. Process, according to claim 1, **characterized in that** in step "e", the position of the mass center of the oil seep point varies, going back in time and space, until achieve the seabed; wherein the 4D current and wind fields obtained in hydrodynamic simulation are imported by the inverse model and they are the fields that will transport oil until its origin, going back in time; wherein the model transports, back in time, the mass center of the seep point detected at the surface.

8. Process, according to claim 7, **characterized in that** the point where the oil seep was detected by satellite is the final position, and the position immediately prior in time ($S_{ia}$) is calculated from velocity, temporal resolution of the model ($\Delta t$) and a random displacement, due to diffusive processes:

$$\vec{v} = \frac{\triangle \vec{S}}{\triangle t} = \frac{\vec{S}_f - \vec{S}_i}{\triangle t}$$

$$\vec{S}_i = -\vec{v} * \triangle t + \vec{S}_f$$

$$\vec{S}_{ia} = \vec{S}_i + \vec{dif}.$$

wherein, when calculating the following displacement $S_{ia}$ becomes $S_f$ and a new prior position is calculated and successively until the seep centroid reaches the seabed; wherein the time $\Delta t$ should be sufficiently short in order that the centroid necessarily passes through all the vertical layers; wherein the first field of $\vec{v}$ to be used is that field referring to the moment of satellite detection and the second field of $\vec{v}$ is the field from 1 hour before the detection; wherein the transportation as promoted by the current calculated in the step of hydrodynamic simulation ($\vec{U}_f$) takes into account the additional transportation carried out by the wind and the transportation due to waves.

9. Process, according to claim 8, **characterized in that** the effects of additional wind transportation and the transportation due to waves are parameterized as a function of wind and added to the field of velocities that will transport the oil in:

$$\vec{v} = f\left(\vec{U}_f, \vec{W}\right)$$

10. Process, according to claim 7, **characterized in that** the time while the oil remains at the sea surface (TS) before it is detected by the satellite is obtained as a function of the oil backscatter coefficient in the SAR image ($\sigma^0$) and wind at the moment of detection:

$$TS = f\left(\sigma^0, W\right) \pm Error$$

wherein the backscattering coefficient is a radiometric quantity that expresses the radar reflected signal per unit area, wherein the presence of oil decreases the backscattering of the surface and insofar as the surface time increases, the contrast between oil backscatter and adjacent water goes vanishing.

11. Process, according to claim 7, **characterized in that** between 25 and 50 simulations for each seep point are performed, with varying TS, vertical velocity, diffusion and wind, wherein the number of simulations will depend on the magnitude of error of TS; wherein each seep point (1) at sea surface is associated with a set of solutions having at least 25 points at seabed that are their possible origins.

12. Process, according to claim 1, **characterized in that** in step "f" an algorithm scans all the solutions of all the seep points searching for clusters of 3 or more different seep solutions where the maximum convergence between them happens, wherein the sum of the distances between solution points is the least between them.

13. Process, according to claim 1, **characterized in that** in step "g" specific software calculates the reliability factor that will be combined with the area size, in order to classify the seep area in 6 levels; wherein the Reliability Factor is a function of 5 variables: (1) number of cluster solutions; (2) number of distinct dates among the cluster seep points; (3) horizontal distance between the seep detection position and its origin at the seabed; (4) average error of TS; and (5) proximity of geological faults; wherein each variable taken into account in the Reliability Factor receives a score between 0 and 1; wherein the 6 levels are defined according to the following table:

|  | Area < 30 km2 | Area > 30 km2 |
|---|---|---|
| **Rf > 0.75** | N1 | N2 |
| **0.50 < Rf < 0.75** | N3 | N4 |
| **Rf < 0.50** | N5 | N6 |

wherein N1 is the class that indicates less exploratory risk.

# Fig. 1

# Fig. 2

## INTERNATIONAL SEARCH REPORT

| International application No. |
|---|
| PCT/BR2013/000136 |

**A. CLASSIFICATION OF SUBJECT MATTER**

G01S 13/62 (2006.01), G01S 13/90 (2006.01)

According to International Patent Classification (IPC) or to both national classification and IPC

**B. FIELDS SEARCHED**

Minimum documentation searched (classification system followed by classification symbols)

**G01S**

Documentation searched other than minimum documentation to the extent that such documents are included in the fields searched

Electronic data base consulted during the international search (name of data base and, where practicable, search terms used)

**EPODOC**

**C. DOCUMENTS CONSIDERED TO BE RELEVANT**

| Category* | Citation of document, with indication, where appropriate, of the relevant passages | Relevant to claim No. |
|---|---|---|
| A | WO 2009144754 A1 ( COSTANTINI MARIO [IT])<br>**3 December 2009** (2009-12-03) | 1 - 26 |
| A | CN 102967310 A (707 RES INST OF CSIC)<br>**13 March 2013** (2013-03-13) | 1 - 26 |
| A | US 2009278541 A1 (MULTIFIELD GEOPHYSICS AS [NO])<br>**12 November 2009** (2009-11-12) | 1 - 26 |
| A | GB 2423370 A (OHM LTD [GB])<br>**23 August 2006** (2006-08-23) | 1 - 26 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 August 2013** | **04 September 2013** |

| Name and mailing address of the ISA/ | Authorized officer |
|---|---|
| INSTITUTO NACIONAL DA PROPRIEDADE INDUSTRIAL<br>Rua Sao Bento n° 1, 17° andar<br>Facsimile No.   cep: 20090-010. Centro - Rio de Janeiro/RJ | **Clodoaldo Cordeiro Rulli**<br>+55 21 3037-3493/3742<br>Telephone No. |

Form PCT/ISA/210 (second sheet) (July 2009)

INTERNATIONAL SEARCH REPORT
Information on patent family members

International application No.

PCT/BR2013/000136

| | | | |
|---|---|---|---|
| WO 2009144754 A1 | 2009-12-03 | CN 102144173 A | 2011-08-03 |
| | | EP 2283380 A1 | 2011-02-16 |
| | | RU 2010154096 A | 2012-07-10 |
| | | RU 2472174 C2 | 2013-01-10 |
| | | US 2011169686 A1 | 2011-07-14 |
| CN 102967310 A | 2013-03-13 | none | |
| US 2009278541 A1 | 2009-11-12 | AU 2007215628 A1 | 2007-08-23 |
| | | BR PI0707773 A2 | 2011-05-10 |
| | | CA 2642633 A1 | 2007-08-23 |
| | | EP 1987375 A1 | 2008-11-05 |
| | | MX 2008010284 A | 2008-10-21 |
| | | NO 20060685 A | 2007-08-14 |
| | | NO 326957 B1 | 2009-03-23 |
| | | RU 2008136858 A | 2010-03-20 |
| | | US 7982465 B2 | 2011-07-19 |
| | | WO 2007094676 A1 | 2007-08-23 |
| GB 2423370 A | 2006-08-23 | AU 2006217768 A1 | 2006-08-31 |
| | | BR PI0608870 A2 | 2010-02-02 |
| | | CA 2598468 A1 | 2006-08-31 |
| | | CN 101128747 A | 2008-02-20 |
| | | EP 1851570 A1 | 2007-11-07 |
| | | GB 0503627 D0 | 2005-03-30 |
| | | GB 2423370 B | 2007-05-02 |
| | | MX 2007010248 A | 2007-09-07 |
| | | NO 20074858 A | 2007-11-22 |
| | | RU 2007135175 A | 2009-03-27 |
| | | RU 2430387 C2 | 2011-09-27 |
| | | US 2006186889 A1 | 2006-08-24 |
| | | US 7362102 B2 | 2008-04-22 |
| | | US 2008150538 A1 | 2008-06-26 |
| | | US 7592814 B2 | 2009-09-22 |
| | | WO 2006090105 A1 | 2006-08-31 |

Form PCT/ISA/210 (patent family annex) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO PI06221610 A
- CN 102096070
- CN 101571915
- RU 2231037